## Europäisches Patentamt
## European Patent Office
## Office européen des brevets

(19)

(11) Publication number: **0 016 517**
**B1**

(12) **EUROPEAN PATENT SPECIFICATION**

(45) Date of publication of patent specification: **15.09.82**

(51) Int. Cl.³: **B 01 D 17/02**

(21) Application number: **80300302.9**

(22) Date of filing: **01.02.80**

(54) **A method of recovering oil and apparatus for recovering oil by that method.**

(30) Priority: **26.02.79 US 15468**
**10.10.79 US 83278**

(43) Date of publication of application:
**01.10.80 Bulletin 80/20**

(45) Publication of the grant of the patent:
**15.09.82 Bulletin 82/37**

(84) Designated Contracting States:
**FR GB NL SE**

(56) References cited:
**DE - A - 2 264 011**
**DE - C - 291 781**
**US - A - 1 490 794**
**US - A - 1 915 169**
**US - A - 2 744 630**
**US - A - 2 904 180**
**US - A - 3 067 877**
**US - A - 3 211 535**
**US - A - 3 425 556**
**US - A - 3 781 201**
**US - A - 4 132 645**

(73) Proprietor: **ESI INTERNATIONAL LIMITED**
**G.P.O. Box 211**
**Vila New Hebrides (GB)**

(72) Inventor: **Uncas, Favret, Jr.**
**Route 3, Box 388 (C)**
**Covington Louisiana 70433 (US)**

(74) Representative: **Haggart, John Pawson et al,**
**Page, White & Farrer 27 Chancery Lane**
**London, WC2A 1NT (GB)**

Courier Press, Leamington Spa, England.

# A method of recovering oil and apparatus for recovering oil by that method

The invention relates to a method of recovering oil from an oil containing mixture at an oil handling facility and apparatus for recovering oil by that method. In particular, this invention relates to oil recovery at an oil handling facility located adjacent a body of water, and to the disposal of the relatively oil-free fluid into the body of water.

In United States Patent 3,893,918, issued July 8, 1975, there are disclosed skim piles or elongate separator conduits that are useful and efficient in such recovery and disposal operations. The length of the conduit and the operating procedures are such that the rising velocity of the oil in the mixture results in the establishment of an upper oil layer in the conduit.

One of the skim piles disclosed in that patent operates while in continuous communication with the body of water. As such, the total fluid level in the skim pile is responsive to changes in mean level of the water body. Provision is made for withdrawing oil from the oil layer on top of the total fluid column in response to sensing of the level of the interface between such oil layer and the remaining fluid column therebelow. In that fashion, one seeks to insure that only an oil rich mixture is withdrawn from the skim pile, rather than an oil-water mixture. Although that technique has proved quite acceptable, some difficulties have been encountered especially in situations where unpredictably large or erratic total fluid level changes are produced in response to changes in mean level of the body of water.

United States Patent 3,893,918 also discloses a form of skim pile where the level of total fluid in the skim pile is basically isolated from changes in the mean level of the water body through use of a valve. Problems associated with changes in that mean water level are thereby avoided. Such skim piles are normally employed only in shallow water situations where the underwater extent of the skim pile, if it were open at the bottom, would not normally be great enough to allow for good separation of oil. This is because the terminal rising velocity of the oil would not sufficiently overcome the exit velocity of downward flow in the conduit. Although normally closed, valved, skim piles could be employed in deeper water situations, operational and maintenance difficulties could become prominent by reason of the need to control a valve positioned at great depth.

Another form of skim pile has accomplished isolation of the total fluid therein from changes in mean water level without problems associated with underwater valve operation. In that form of skim pile, a generally U-shaped conduit is connected at one end near the bottom of the skim pile, and the upper convered portion of the conduit extends well above the water line.

The U-shaped conduit thus functions as a weir which essentially maintains a fixed, above-water level of total fluid in the skim pile, while isolating that fluid from level changes in the water body. However, use of such skim piles is not without its problems. The expense associated with construction of the weir leg can itself be quite considerable in deep water installations. Moreover, difficulties may be associated with removal of solid particles, such as sand, which settle out and collect at the bottom of the skim pile. A valve can be employed for periodic release of those collected particles but, again, that creates the necessity for underwater valve operation and maintenance.

In United States Patent 3,756,409 issued September 4, 1973, there is proposed a separator conduit where an internal weir-like arrangement is employed, not for total fluid maintenance, but for collection, in a tube, of spillover oil which rises to the top of the fluid column in the conduit. Since that fluid column is responsive to changes in mean level of the body of water, it will be appreciated that spillover of substantial amounts of water into the collection tube could easily result, thereby considerably reducing the efficiency of operation.

The invention as claimed is intended to remedy these drawbacks and obviates or minimizes the problems set out above by providing a method of recovering oil from an oil containing mixture at an oil handling facility located adjacent a body of water and disposing of the relatively oil-free fluid into a body of water, in which a fluid column in continuous communication with a body of water beneath the surface of that body is established having a height responsive to the mean water level of the body of water, and an oil-containing fluid mixture is supplied into the fluid column in a manner which permits oil to rise to the upper region of the fluid column so as to establish an upper oil layer of the fluid column, characterised by establishing a settling fluid body in communication with the fluid column which settling fluid body has a head of total fluid at a level independent of the mean water level of the body of water thereby to enable oil to rise to the upper region of the settling body so as to establish an upper oil layer of the total fluid therein, intermittently transporting fluid from said upper region of the fluid column to the settling fluid body, refluxing fluid from the lower end of the settling body to the fluid column, and recovering oil which rises to the upper oil layer of the settling body.

The invention also provides apparatus for recovering oil from an oil containing mixture by that method, comprising a skim pile having an oil inlet located to permit oil to rise to the upper region of the fluid column and a lower fluid exit for communicating with the body of water so that the total fluid column in the skim pile is responsive to changes in the mean level of the body of water, characterised by a settling tank in which oil is permitted to flow upwardly to form an upper layer of a head of fluid in the settling tank, control means for maintaining the head of fluid in the settling tank at a level which is independent of the mean level of the body of water and for refluxing liquid from beneath said upper layer to an inlet to the skim pile, a conduit leading from the skim pile to the settling tank for intermittently transferring fluid from the skim pile to the settling tank, and means including an outlet from an upper region of the settling tank for recovering oil from said upper layer.

An advantage of such a method and apparatus is that changes in mean water level do not adversely affect operation, even though an open ended skim pile is used, and essentially continuous separation takes place.

The skim pile is disposed in a generally upwardly extending posture, with the exit zone thereof in continuous communication with a body of water, beneath the surface thereof. This establishes a fluid column within the skim pile to a height responsive to the mean level of the water body. An oil-containing fluid mixture is supplied in to the fluid column within the skim pile in a manner that permits oil to rise to the upper region of the fluid column so as to establish an upper oil layer.

In the settling tank, a head of fluid is established and maintained at a level independent of the mean level of the water body. Thus, the settling tank may be considered to be functionally external to and remote from the skim pile in the sense that the total fluid level in the settling tank is independent of the mean level of the water body which determines the level of fluid in the skim pile. It will, however, be appreciated that the settling tank may be physically proximate to and even mounted within the skim pile.

In any case, fluid is intermittently transferred from the upper region of the skim pile, through a transport conduit, to the isolated head of fluid in the settling tank. Although changes in mean water level may affect the constituency of the transferred fluid, it will consist mainly if not entirely of separated oil.

Even if water and/or solids, such as sand, happen to be transferred because of the level of total fluid in the skim pile at the time of transfer, the isolated separation which takes place in the settling tank nevertheless results in the establishment of an essentially pure oil layer at the top end of the head of fluid therein. This oil is recovered from the upper end of that head of fluid.

Excess fluid from the settling tank is refluxed by transfer from the lower end of the settling tank back to the skim pile. There, any oil in the refluxed fluid is separated out through normal skim pile operation. As such, essentially continuous separation is taking place, either in the skim pile or in the settling tank, or both; and ecologically acceptable (i.e. non-oil contaminated) fluid is still being disposed of in the water body. Moreover, the ultimate oil recovery is isolated from changes in the level of the water body, therby enhancing the efficiency of the recovery operation.

The reflux operation may be accomplished through the use of a tank fluid level control weir associated with the settling tank. This weir also maintains the established head of isolated fluid in the settling tank. A siphon breaker in the form of an air inlet is associated with the level control weir to prevent siphoning of the contents of the settling tank after excess fluid is automatically refluxed through the level control weir. The level control weir may be to function as an external weir in the sense that the level control influence that it exerts on total fluid in the skimming vessel is external to the fluid head conditions that would otherwise exist therein. However, a substantial portion or even most of that weir may be mounted within the skimmer assembly.

An internal, separating weir may be located within, and form a portion of the settling tank assembly adjacent its upper end. This separating weir serves to isolate spillover oil from the established head of fluid in the settling tank. The weir preferably comprises an open-ended, generally conical shaped barrier between that head of fluid and the spillover oil.

By gradually restricting the space that the separated oil can occupy and thus increasing the height of the top oil layer, such a construction of the separating weir minimizes the interface area between the separated oil and the fluid beneath. In this fashion, the relative purity of the oil which lies above the interface is enhanced. Hence the purity of the spillover oil that is ultimately recovered is also enhanced.

Adjustably mounted in the open upper end of the conical shaped barrier is an open ended tube that forms a continuation of the separating weir. The adjustability of the outlet of the tube allows for fine adjustment of the height of the upper oil layer and thus further aids in controlling the purity of the spillover oil.

Some ways of carrying out the invention are described below, by way of example, with reference to the accompanying drawings, and in which:

Figure 1 is a schematic elevational view of a preferred form of oil recovery apparatus according to the present invention and illustrates a preferred oil recovery method according to the present invention;

Figure 2 is an elevational view, partially in section, depicting a settling tank assembly in accordance with the present invention;

Figure 3 is a top plan view of the settling tank assembly of Figure 1;

Figure 4 is a sectional view of the adjustable outlet from the internal weir of the settling tank tubes along line 4—4 of Figure 2; and

Figure 5 is a schematic elevational view similar to Figure 1 but wherein the skimmer assembly is mounted within the skim pile.

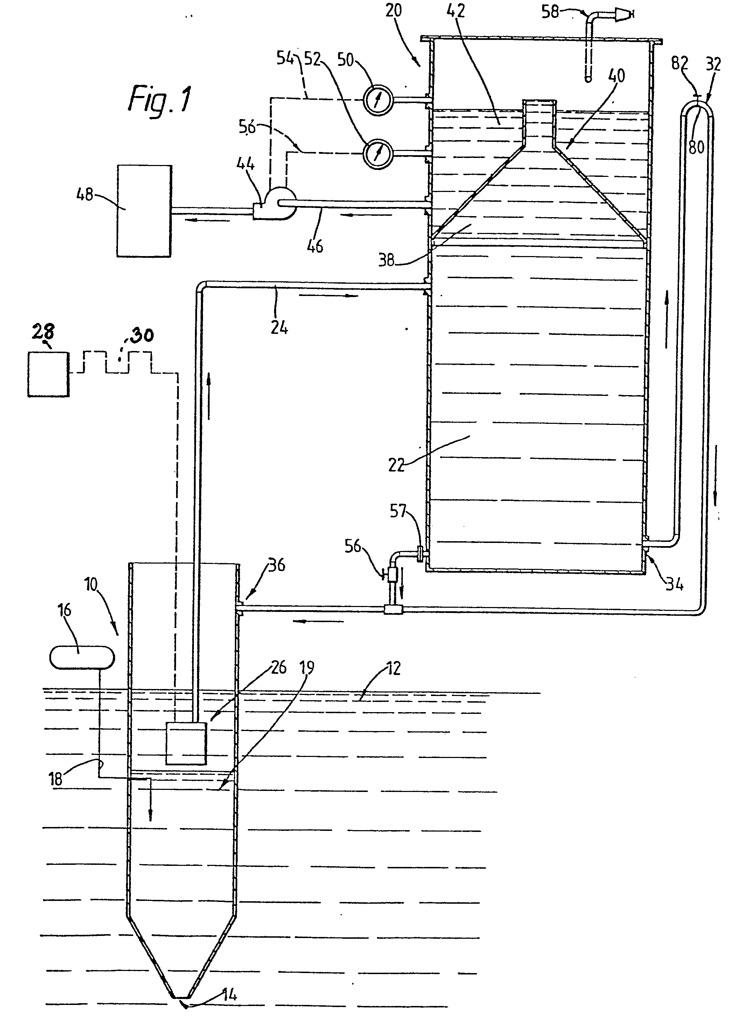

Figure 1 shows apparatus for recovering oil from an oil containing mixture by the method of the invention.

An elongate, open bottom separator conduit, or skim pile 10 is disposed in a generally upwardly extending posture in a body of water 12 adjacent an oil handling facility. The open bottom 14 of the skim pile establishes an exit zone in continuous communication with the water body.

An oil containing fluid mixture is supplied to the skim pile 10 from a suitable source 16, through supply conduits, schematically indicated at 18. The mixture so supplied may emanate from skid drains or other sources associated, for example, with an offshore drilling operation. In any event, the manner of supply of the mixture is sufficient to permit oil to rise to the upper region 19 of the fluid column within the skim pile 10. This establishes an upper layer of oil on that fluid column.

Preferably the structure of the open ended skim pile 10 and the fluid mixture supply equipment associated therewith, as well as the operation thereof, is essentially identical to that described in U.S. Patent 3,893,918. It will, however, be appreciated that other forms of separator conduits and other operational techniques may be employed, while still realizing the benefits of the present invention.

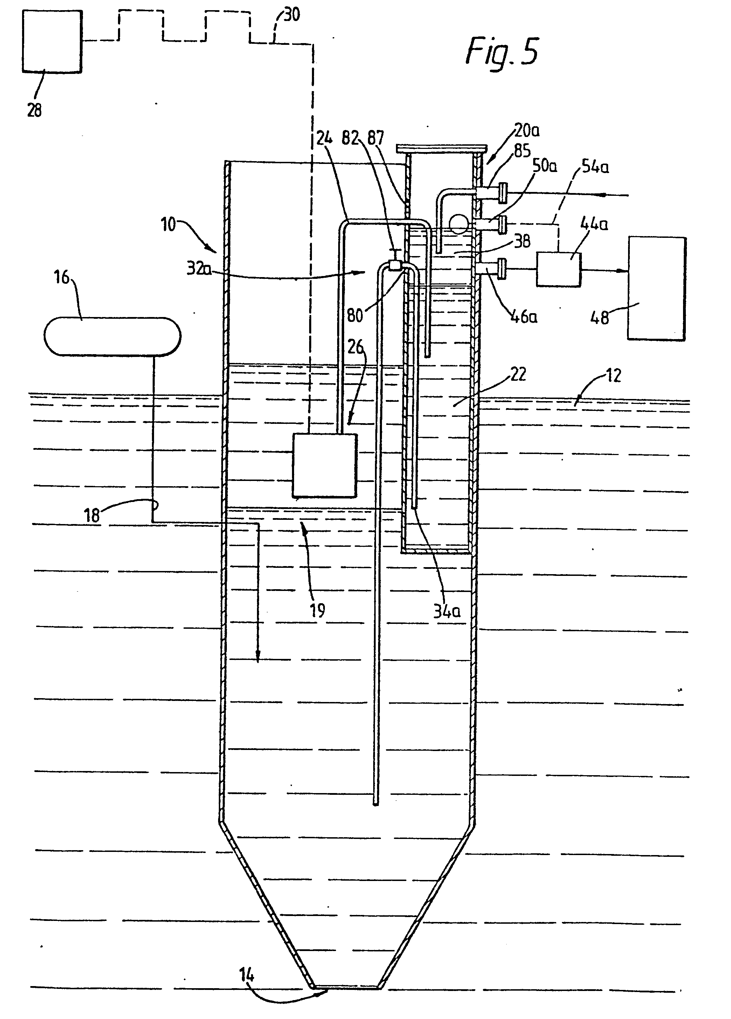

The skim pile 10 is interconnected with a settling tank assembly 20, where a head of fluid 22 is established and maintained at a level independent of the level of the water body 12. Any convenient location for the settling tank assembly 20 will suffice, for example on a drilling platform (not shown) where the source fluid supplied to the skim pile 10 emanates. Alternatively, the settling tank assembly 20 may be suspended from or mounted on the portion of the skim pile 10 which projects well above the water body 12. As will also become apparent, the settling tank assembly 20 may even be mounted within the skim pile 12 (see Figure 5).

Fluid is intermittently transferred from the upper region 19 of the skim pile 10 to the isolated settling fluid body 22, which fluid body has a head of total fluid in the settling tank assembly 20. In this connection, a transfer conduit is schematically depicted at 24 in Figure 1. The inlet to the transfer conduit 24 is connected to a pump or blowcase 26 disposed in the fluid at the upper region 19 of the skim pile.

At many, if not most, times the fluid in this upper region will consist by and large of relatively pure oil. An interface control system, such as the one described in the previously incorporated disclosure of U.S. Patent 3,893,918, may even be employed to help insure that this is the case. If, however, transfer occurs at times of large or erratic total fluid level changes in the skim pile 10 (in response to changes in the mean level of the water body 12), the fluid so transferred would not be entirely suitable for immediate recovery.

The use of the interconnected settling tank assembly 20 remedies that problem without any need for concern over the accuracy or reliability of an interface control. In fact such control may, if desired, be dispensed with; and transfer of fluid to the settling tank assembly may be accomplished at intervals in any suitable manner.

For example, a suitable time based intermitter 28, with or without manual override, may be used to provide a suitable control signal 30 to the pump or blowcase 26.

When a pump initiates the transfer to the settling tank assembly 20, suction from the pump withdraws the fluid from the upper region 19 of the skim pile 10. When a blowcase is used, pressure is the initiating transfer force. In this regard, a blowcase basically comprises a tube with inlet and outlet check valves. Fluid flows into the tube through the inlet check valve until the tube is filled, at which time the pressure of the interval fluid holds both check valves closed. A supply of external pressure to outlet check valve serves to open the outlet and blow out the contents of the tube, while at the same time forcing the inlet check valve closed, all in a manner which will be readily appreciated by those skilled in the art.

The overall level of fluid in the settling tank assembly 20 depicted in Figure 1 is maintained by a level control weir assembly schematically indicated at 32. This weir assembly 32 is essentially a generally U-shaped tube disposed in a generally vertical position. Its inlet is connected to the lower end of the settling tank, as indicated at 34, and its outlet connected to the skim pile, as indicated at 36. Thus, when fluid is transferred to the settling tank, excess fluid above the level maintained by the weir refluxes back to the skim pile.

In this connection, the inlet 34 to the level control weir 32 is disposed at the lower end of the settling tank so that the most relatively oil-free fluid is refluxed, while the oil-rich fluid remains to undergo separation within the settling tank during periods when the total fluid therewithin is basically at rest. This oil rises toward the top of the settling tank to establish an upper oil layer 38 therewithin.

This upper oil layer 38 is surrounded by an open-ended, generally conical barrier 40 that forms a portion of the settling tank and establishes a separating weir. In a manner more fully described below, rising oil spills over the separating weir 40, and the spillover oil 42 is isolated from the established head of fluid 22.

The isolated oil so recovered may be transported to any desired location in any suitable manner. For example, a pump 44 may be employed to withdraw oil through an outlet conduit 46 and deliver the oil into the main system 48 associated with the oil handling facility.

Preferably, withdrawal of oil by the pump 44 is controlled through conventional high and low level sensors 50 and 52. These sensors communicate with the zone reserved for spillover oil 42 and provide initiation and termination signals 54 and 56 to the pump 44.

Solids such as sand which deposits at the bottom of the settling tank may also be removed and refluxed. For this purpose a valve 56, located at the bottom of the settling tank, permits emptying of the solids into the conduit which carries the reflux fluid that exits through the level control weir 32. The valve may be manually operated or automatically controlled in any suitable manner.

While the settling tank assembly 20 heretofore described employs the level control weir 32 to maintain fluid level and to permit reflux, it will be appreciated that other structures may be alternatively utilized. In this regard, the level control weir 32 may be dispensed with and both the fluid level of the settling tank and refluxing may be entirely controlled by the valved outlet 56 from the bottom of the tank which directly feeds back to the skim pile 10.

The tank would then basically become a miniaturized closed end skim pile of the type described in U.S. Patent 3,893,918, with the advantage that the valved outlet is more readily accessible. Of course, this arrangement would necessitate insuring that the valve 56 is controlled in a manner which would avoid overfilling the settling tank, and the atmospheric vent 58 shown in Figure 1 would be deleted. The separating weir 40 could, however, be retained.

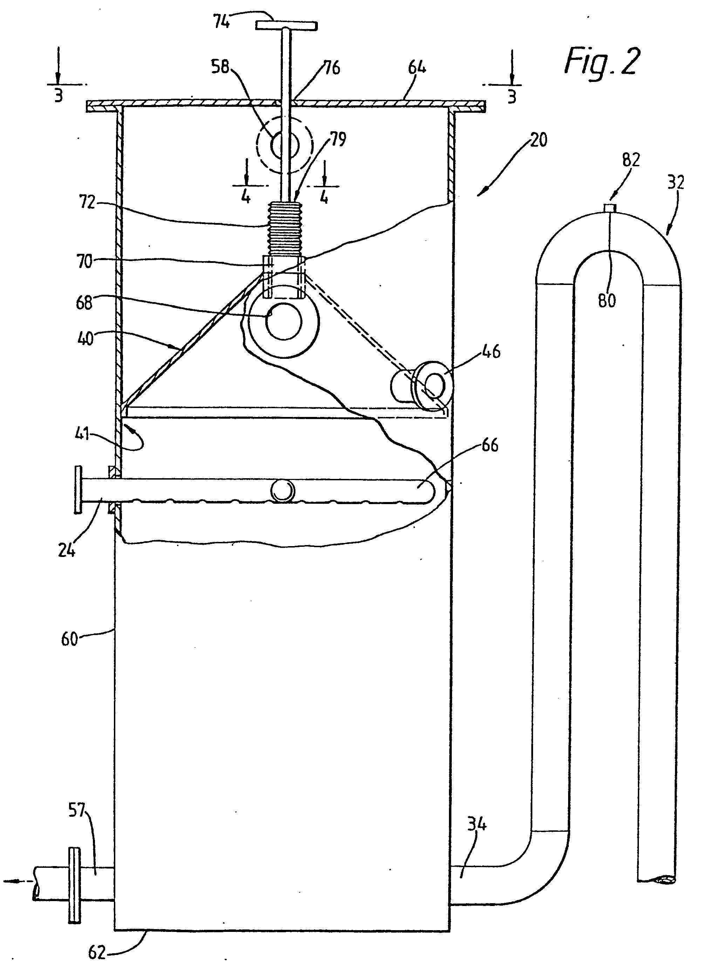

Figures 2—4 depict further details of the separating weir 40 as well as other portions of the settling tank assembly 20.

The basic settling tank structure is comprised of a generally cylindrical vessel 60 with a closed bottom 62 and a cover plate 64. All fluid transfer to and from the vessel 60 occurs through the cylindrical sidewall.

The transfer conduit 24 which brings fluid from the skim pile terminates in a distribution header 66 internally of the vessel at a level slightly beneath the separating weir 40. The vessel outlet which constitutes the inlet 34 to the level control weir 32 is located near the bottom of the vessel, as is a fitting 57 for the valved outlet 56.

Slightly above the level at which the conical separating weir 40 joins the cylindrical sidewall 60 to which it is welded (as indicated at 41), the outlet 46 for the spillover oil is located. Thereabove, a fitting 68 associated with the high and low level spillover oil sensors 50 and 52 (not shown in Figure 2) is positioned. Near the top of the vessel 60, the atmospheric vent 58 is disposed.

The uppermost open end of the conical weir 40 includes a cylindrical sleeve 70 which is internally threaded. Adjustably threadably received within the sleeve is an externally threaded, open-ended tube 72 which forms a continuation of the weir.

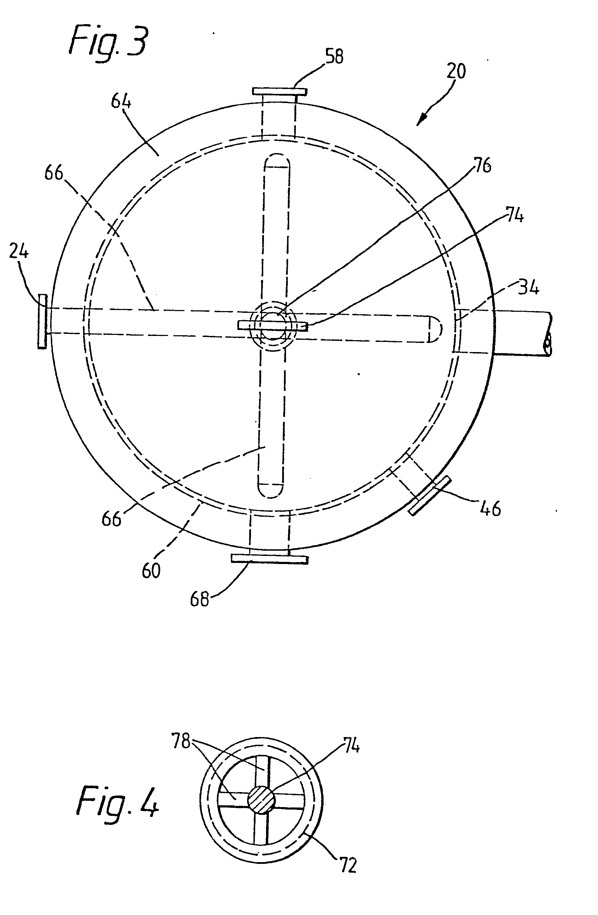

Adjustment of the tube 72 is accomplished by the turning of a T-shaped bar 74 that projects into the vessel 60 through a packing gland 76 in the cover plate 64. The lower end of the bar 74 is welded to a cross web assembly 78 located internally of the tube 72 (see Figure 4). As will be appreciated, through adjustment of the sleeve, the level at which spillover occurs can be finely adjusted.

In operation, the level control weir 32 maintains an established level of fluid in the vessel 60 and provides for refluxing of excess fluid. Siphoning of the vessel contents is prevented by a siphon breaker 82 of conventional construction which is located at the curved or transition section 80 of the level control weir.

Oil within the vessel 60 rises toward the top where it forms a layer. The conical separating weir 40 restricts the upper oil layer and tends to maximise the height thereof for a given volume. Thus, an oil rich to portion of the layer is insured and the oil-water interface is reduced to further minimize the possibility of water contamination.

The adjustable tube 72 which forms a continuation of the separating weir 40 allows for adjusment of the height at which spillover occurs. Because of the manometer effect resulting from the interconnection between the vessel 60 and the level control weir 32, the level inside the vessel 60 will tend toward a height greater than the fluid level in the level control weir 32 (see Figure 1). This is because the density of the oil at the top of the fluid in the vessel 60 is less than the density of the fluid in the level control weir. Thus, the resulting force balance required in the manometer effect cannot take place unless the total fluid in the vessel (including the lighter upper oil layer) is higher than the fluid in the level control weir 32 when the system is at rest.

Therefore, if the outlet 79 (see Figure 2) of the adjustable tube 72 is maintained slightly above the high point of the level control weir 32, the manometer effect will produce spillover. Of course, spillover could occur if the outlet 79 is located below the high point of the level control weir 32, but this could untimately result in water spilling over.

Accordingly, the outlet 79 is adjustable within limits between the low point of the transition section 80 of the level control weir and a location slightly above the high point of that transtion section 80. In intermediate positions the natural spillover from the manometer effect will take place, as will a forced spillover that results from fluctuations in fluid level in the level control weir, which fluctuations are produced between times of refluxing and times of rest.

In the embodiment of the invention depicted in Figure 5, a skimmer assembly 20a is physically mounted within the skim pile 10. For ultimate oil withdrawal by a pump 44a a conduit 46a also thus passes though the skim pile sidewall. If desired, some relatively oil-rich fluid which is to undergo separation may be introduced directly into the skimmer assembly 20a from some suitable source through a conduit indicated at 85.

Generally, the skimmer assembly 20a is similar in structure and function to the skimmer vessel 20 already described, and further detailed description is unnecessary. However, it should be noted that the separating weir has not been illustrated in conjunction with Figure 5. Although it may be employed, if desired, it is not normally quite as justified where, as in the case of Figure 5, the skimmer assembly 20a is itself conveniently structured with a greater length and a smaller diameter that aids in producing a relatively deep oil layer 38 at the top of the fluid column 22.

It will also be apparent that the level control weir 32a is depicted as having at least one leg physically within the skimmer vessel 20a. Nevertheless its function is similar to that of the level control weir 32 previously described in that it establishes and maintains a desired total fluid level and refluxes excess fluid. In this latter connection, the inlet 34a to the weir 32a is disposed near the bottom of the skimmer assembly so that fluid with the least amount of oil is to be refluxed. The siphon breaker 82, of course, prevents emptying of the skimmer vessel contents below the desired level.

Because of the relatively small diameter of the skimmer vessel 20a the system hydraulics are such that the upper oil layer 38 of total fluid will normally extend considerably above the uppermost transition section 80 of the level control weir 32a.

A high level oil spillover opening 87 may be provided in the skimmer vessel so that if the level gets too high, oil will spill over into the basically oil-rich layer 19 in the skim pile 10.

Withdrawal of oil from the skimmer assembly 20a by the pump 44a may be controlled by any suitable level control device 50a disposed at which provides appropriate control signals 54a.

## Claims

1. A method of recovering oil from an oil containing mixture at an oil handling facility located adjacent a body of water and disposing of the relatively oil-free fluid into a body of water, in which a fluid column in continuous communication with a body of water beneath the surface of that body is established having a height responsive to the mean water level of the body of water, and an oil-containing fluid mixture is supplied into the fluid column in a manner which permits oil to rise to the upper region of the fluid column so as to established an upper oil layer of the fluid column, characterised by establishing a settling fluid body in communication with the fluid column which settling body has a head of total fluid at a level independent of the mean water level of the body of water thereby to enable oil to rise to the upper region of the settling body so as to establish an upper oil layer of the total fluid therein, intermittently transporting fluid from said upper region of the fluid column to the settling fluid body, refluxing fluid from the lower end of the settling body to the fluid column, and recovering oil which rises to the upper oil layer of the settling body.

2. Apparatus for recovering oil from an oil containing mixture by a method according to Claim 1, comprising a skim pile having an oil inlet located to permit oil to rise to the upper region of the fluid column and a lower fluid exit for communicating with the body of water so that the total fluid column in the skim pile is responsive to changes in the mean level of the body of water, characterised by a settling tank in which oil is permitted to flow upwardly to form an upper layer of a head of fluid in the settling tank, control means for maintaining the head of fluid in the settling tank at a level which is independent of the mean level of the body of water and for refluxing liquid from beneath said upper layer to an inlet to the skim pile, a conduit leading from the skim pile to the settling tank for intermittently transferring fluid from the skim pile to the settling tank, and means including an outlet from an upper region of the settling tank for recovering oil from said upper layer.

3. Apparatus according to Claim 2, characterised in that the control means comprises a level control weir in the settling tank.

4. Apparatus according to Claim 3, characterised by siphon breaker means connected to the level control weir means.

5. Apparatus according to any one of Claims 3 to 4, characterised in that the means for recovering oil from the upper layer in the settling tank includes level sensing means for controlling said oil recovery.

6. Apparatus according to any one of Claims 3 to 5, characterised in that the control means is connected to the lower end of the settling tank so as to transfer excess fluid from the lower end of the tank.

7. Apparatus according to any one of Claims 3 to 6, characterised by a barrier for recovering oil from said upper layer comprising a separating weir located within and forming a portion of the settling tank adjacent the upper end of the tank for isolating spillover oil from the established head of fluid in the settling tank.

8. Apparatus according to Claim 7, characterised in that the separating weir is an open-ended, generally conically shaped barrier located in the settling tank.

9. Apparatus according to Claim 8, characterised in that the separating weir includes an open-ended tube, adjustably mounted in the upper end of the barrier and forming a continuation thereof.

10. Apparatus according to Claim 9, characterised in that said tube is adjustable relative to the level control weir.

## Revendications

1. Procédé de récupération d'huile à partir d'un mélange contenant de l'huile à une installation de traitement d'huile située au voisinage d'une masse d'eau et de décharge du fluide relativement exempt d'huile dans une masse d'eau, suivant lequel il est établi une colonne de fluide communiquant en continu avec une masse d'eau au-dessous de la surface de cette masse et de hauteur sensible au niveau d'eau moyen de la masse d'eau, et un mélange fluide contenant de l'huile arrive dans la colonne de fluide d'une manière qui permet à l'huile de monter jusqu'à la région supérieure de la colonne de fluide pour établir une couche d'huile supérieure de la colonne de fluide, caractérisé en ce qu'on met une masse de fluide en cours de décantation en communication avec la colonne de fluide laquelle masse de fluide en cours de décantation comporte une colonne de fluide total atteignant un niveau indépendant du niveau moyen de la masse d'eau pour permettre par là à l'huile de monter jusqu'à la région supérieure de la masse en cours de décantation de façon à établir une couche d'huile supérieure dans le fluide total de cette masse, on transporte par intermittence du fluide de ladite région supérieure de la colonne de fluide dans la masse de fluide en cours de décantation, on provoque le reflux de fluide à partir de l'extrémité inférieure de la masse en cours de décantation vers la colonne de fluide, et l'on récupère l'huile qui monte jusqu'à la couche d'huile supérieure de la masse en cours de décantation.

2. Appareil pour la récupération d'huile par le procédé selon la revendication 1, à partir d'un mélange contenant de l'huile, comportant une pile d'écumage qui présente une entrée d'huile placée pour permettre à l'huile de monter jusqu'à la région supérieure de la colonne de fluide et une sortie de fluide inférieure destinée à communiquer avec la masse d'eau de façon que la colonne de fluide total contenue dans la pile d'écumage soit sensible aux variations du niveau moyen de la masse d'eau, caractérisé par un réservoir de décantation dans lequel de l'huile peut s'écouler vers le haut pour former la couche supérieure d'une colonne de fluide présente dans le réservoir de décantation, un moyen de commande pour maintenir la colonne de fluide présente dans le réservoir de décantation à un niveau indépendant du niveau moyen de la masse d'eau et pour causer le reflux de liquide à partir de dessous ladite couche supérieure jusqu'à une entrée de la pile d'écumage, un conduit menant de la pile d'écumage au réservoir de décantation pour transférer par intermittence du fluide de la pile d'écumage dans le réservoir de décantation, et un moyen comportant une sortie desservant une région supérieure du réservoir de décantation pour récupérer de l'huile à partir de ladite couche supérieure.

3. Appareil selon la revendication 2, caractérisé en ce que le moyen de commande comprend un déversoir de commande de niveau situé dans le réservoir de décantation.

4. Appareil selon la revendication 3, caractérisé par un moyen casse-vide connecté au moyen déversoir de commande de niveau.

5. Appareil selon l'une quelconque des revendications 3 à 4, caractérisé en ce que le moyen de récupération d'huile à partir de la couche supérieure située dans le réservoir de décantation comporte un moyen détecteur de niveau pour la commande de cette récupération d'huile.

6. Appareil selon l'une quelconque des revendications 3 à 5, caractérisé en ce que le moyen de commande est connecté à l'extrémité inférieure du réservoir de décantation de façon à transférer le fluide en excès à partir de l'extrémité inférieure du réservoir.

7. Appareil selon l'une quelconque des revendications 3 à 6, caractérisé par un barrage pour la récupération d'huile à partir de ladite couche supérieure comprenant un déversoir séparateur situé à l'intérieur et faisant partie du réservoir de décantation près de l'extrémité supérieure du réservoir pour isoler l'huile ayant débordé de la colonne de fluide établie dans le réservoir de décantation.

8. Appareil selon la revendication 7, caractérisé en ce que le déversoir séparateur est un barrage de forme générale conique, à extrémité ouverte, situé dans le réservoir de décantation.

9. Appareil selon la revendication 8, caractérisé en ce que le déversoir séparateur comporte un tube à extrémités ouvertes, monté de mainière réglable dans l'extrémité supérieure du barrage et formant un prolongement de celui-ci.

10. Appareil selon la revendication 9, caractérisé en ce que ledit tube est réglable par rapport au déservoir de commande de niveau.

## Patentansprüche

1. Verfahren zur Widergewinnung von Öl aus einem ölhaltigen Gemisch in einer Ölbearbeitungsanlage, die in der Nähe eines stehenden Gewässers liegt und die verhältnismässig ölfreie Flüssigkeit in ein stehendes Gewässer ableitet, wobei eine Flüssigkeitssäule eingerichtet wird, die in dauernder Verbindung mit einem stehenden Gewässer unterhalb der Oberfläche dieses Gewässers steht, und deren Höhe vom mittleren Wasserpegel des stehenden Gewässers abhängt, und wobei ein ölhaltiges Flüssigkeitsgemisch in die Flüssigkeitssäule dergestalt geleitet wird, daß das Öl in den oberen Bereich der Flüssigkeitssäule aufsteigen kann, um eine obere Ölschicht in der Flüssigkeitssäule herzustellen, dadurch gekennzeichnet, daß eine Absetz-Flüssigkeitsmasse vorgesehen ist, die in Verbindung mit der Flussigkeitssäule steht, und die einen Gesamtflüssigkeitsstand aufweist, dessen Höhe

unabhängig vom mittleren Wasserpegel des stehenden Gewässers ist, wodurch ermöglicht wird, daß das Öl in den oberen Bereich der Absetz-Flüssigkeitsmasse aufsteigen kann, um in der darin enthaltenen Gesamtflüssigkeit eine obere Ölschicht aufzubauen, daß die Flüssigkeit vom oberen Bereich der Flussigkeitssäule in die Absetz-Flüssigkeitsmasse gebracht, Flüssigkeit vom unteren Ende der Absetz-Flussigkeitsmasse in die Flüssigkeitssäule zurückgeleitet und das Öl, das in die obere Schicht der Absetz-Flüssigkeitsmasse aufsteigt, zurückgewonnen wird.

2. Vorrichtung zur Wiedergewinnung von Öl aus einem ölhaltigen Gemisch durch ein Verfahren nach Anspruch 1, bestehend aus einem Abschöpfspeicher mit einem Öleintritt, der derart angeordnet ist, daß das Öl in den oberen Bereich der Flüssigkeitssäule ansteigen kann, und einem unteren Flüssigkeitsaustritt zur Verbindung mit einem stehenden Gewässer, so daß die gesamte Flüssigkeitssäule im Abschöpfspeicher auf Änderungen des mittleren Wasserpegels des stehenden Gewässers anspricht, gekennzeichnet durch einen Absetzbehälter, in dem Öl nach oben steigen kann, um eine obere Schicht eines Flüssigkeitsstands im Absetzbehälter zu bilden, durch eine Steuereinrichtung zum Aufrechterhalten des Flüssigkeitsstands im Absetzbehälter auf einem Pegel, der unabhängig vom mittleren Pegel des stehenden Gewässers ist, und zum Zurückleiten der Flüssigkeit von unterhalb der oberen Schicht zu einem Eintritt des Abschöpfspeichers, eine Leitung, die vom Abschöpfspeicher zum Absetzbehälter führt, um in zeitlichen Abständen Flüssigkeit aus dem Abschöpfspeicher in den Absetzbehälter zu übertragen, und durch eine Einrichtung mit einem Austritt aus dem oberen Bereich des Absetzbehälters zur Wiedergewinnung von Öl aus der genannten oberen Schicht.

3. Vorrichtung nach Anspruch 2, dadurch gekennzeichnet, daß die Steuereinrichtung einen Überlauf zur Pegelsteuerung im Absetzbehälter enthält.

4. Vorrichtung nach Anspruch 3, gekennzeichnet durch eine Saugheber-Unterbrechungseinrichtung, die mit dem Überlauf zur Pegelsteuerung verbunden ist.

5. Vorrichtung nach einem der Ansprüche 3—4, dadurch gekennzeichnet, daß die Einrichtung zur Wiedergewinnung von Öl aus der oberen Schicht im Absetzbehälter eine Pegelfühleinrichtung zur Steuerung der Öl-Wiedergewinnung enthält.

6. Vorrichtung nach einem der Ansprüche 3—5, dadurch gekennzeichnet, daß die Steuereinrichtung mit dem unteren Ende des Absetzbehälters verbunden ist, um überschüssige Flüssigkeit vom unteren Ende des Behälters abzuleiten.

7. Vorrichtung nach einem der Ansprüche 3—6, gekennzeichnet durch eine Schwelle zur Wiedergewinnung von Öl aus der genannten oberen Schicht, mit einem Trenn-Überlauf, der innerhalb des Absetzbehälters in der Nähe des oberen Endes des Behälters liegt und einen Teil desselben bildet, um das vom Flüssigkeitsstand im Absetzbehälter überlaufende Öl zu isolieren.

8. Vorrichtung nach Anspruch 7, dadurch gekennzeichnet, daß der Trenn-Überlauf eine im Absetzhälter angeordnete, allgemein kegelförmige Schwelle mit offenem Ende ist.

9. Vorrichtung nach Anspruch 8, dadurch gekennzeichnet, daß der Trenn-Überlauf ein Rohr mit offenem Ende enthält, das verstellbar im oberen Ende der Schwelle befestigt ist und einen Bestandteil derselben bildet.

10. Vorrichtung nach Anspruch 9, dadurch gekennzeichnet, daß das Rohr im Verhältnis zum Überlauf für die Pegelsteuerung verstellbar ist.

Fig.1

Fig.2

*Fig. 3*

*Fig. 4*

Fig.5

0016517